# EUROPÄISCHE PATENTSCHRIFT

(11) **EP 1 169 673 B1**
(45) Veröffentlichungstag und Bekanntmachung des Hinweises auf die Patenterteilung: **09.07.2003**
(21) Anmeldenummer: 00916799.0
(22) Anmeldetag: 03.03.2000
(51) Int. Cl.: G05D 1/02, B66C 13/46

(54) **VERFAHREN ZUR BESTIMMUNG DER LAGE EINES FAHRZEUGES**
METHOD FOR DETERMINING THE POSITION OF A VEHICLE
PROCEDE DE DETERMINATION DE LA POSITION D'UN VEHICULE

(30) Priorität: 15.04.1999 DE 19916999
(43) Veröffentlichungstag der Anmeldung: 09.01.2002
(73) Patentinhaber: Noell Crane Systems GmbH, 97080 Würzburg (DE)
(72) Erfinder: KLEMENT, Stefan, D-97222 Rimpur (DE)
(74) Vertreter: Lüdtke, Frank, Dipl.-Ing.
(86) Internationale Anmeldenummer: DE0000687
(87) Internationale Veröffentlichungsnummer: WO00063755

(56) Entgegenhaltungen:
- DE-A- 3 606 363
- DE-A- 19 626 044
- FR-A- 2 703 347
- GB-A- 2 270 438

## Beschreibung

Die Erfindung betrifft ein Verfahren zur Bestimmung der Lage eines Fahrzeuges entsprechend dem Oberbegriff des 1. Patentanspruches.

Die Erfindung ist überall dort anwendbar, wo Fahrzeuge, vorzugsweise Portalstapler, zu einem Containerkran in eine genaue Position gebracht werden müssen, so dass ein Nachpositionieren des Containerkranes nicht erfolgen muss.

Containerkrane sind spezielle Containerbrücken zur Schiffsentladung als auch Stapelkrane in einem Containerlager. Bisher wurde der Containerumschlag mit Containerkranen bzw. Portalstaplern nur im Handbetrieb ausgeführt. Bei der Lastübergabe an den Containerkran hat der Fahrer des Transportfahrzeuges die Aufgabe, den Container ungefähr mittig unter dem Containerkran abzusetzen. Zur Lastaufnahme durch den Containerkran wird dieser in der Regel nachpositioniert. Für vollautomatische Containerkrane stellt sich nun die Aufgabe, zur Lastübergabe das Transportfahrzeug immer genau mittig unter dem Containerkran zu positionieren, so dass zur Lastaufnahme durch den Containerkran kein Nachpositionieren erforderlich ist. Das setzt voraus, dass sich das Transportfahrzeug an dem Containerkran so genau orientiert, dass ein exaktes Absetzen des Containers möglich ist.

Aus *DE 36 06 363* ist eine Einrichtung zur Bestimmung der Lage eines Fahrzeuges relativ zu einer Containerhebevorrichtung bekannt, bei der mindestens zwei auf der Basis von Ultraschall arbeitenden Sensoren mit parallel ausgerichteten Achsen eine unveränderte Position in Bezug auf ein Gerüst der Hebevorrichtung einnehmen, das Transportfahrzeug Reflektoren aufweist, Auswerteeinrichtungen mit einem Erkennenungsgerät gekoppelt sind und Haltemarken benötigt werden, um die Positionierung durchzuführen.

Nachteilig an dieser Methode ist u. a., dass zur Oientierung Mittel, wie Haltemarken, Reflektoren o. Ä., angebracht werden müssen, um die Position des Transportfahrzeuges oder des Containers zu erfassen.

Aufgabe ist es daher, ein Verfahren zu entwickeln, mit dem sich ein Transportfahrzeug, vorzugsweise ein Portalstapler, gegenüber einem Containerkran orientiert, ohne dass an diesem Markierungen angebracht sein müssen, so dass ein automatischer Betrieb des Fahrzeuges gewährleistet ist, bei dem die Position des Fahrzeuges gegenüber dem Containerkran immer exakt bekannt ist.

Diese Aufgabe wird nach den Merkmalen des 1. Patentanspruches gelöst. Unteransprüche geben vorteilhafte Ausführungen der Erfindung wieder.

Das erfindungsgemäße Verfahren zur Bestimmung der Lage eines Fahrzeuges relativ zu einem Containerkran basiert auf der Grundlage, dass Containerkrane im Bereich der Stützen durch die Stützen bis zu einer bestimmten Höhe eine markante Kontur aufweisen. An dieser markanten Kontur kann sich das Fahrzeug, beispielsweise ein Portalstapler, orientieren. Für die Orientierung ist es erforderlich, dass beispielsweise der Portalstapler eine Scaneinrichtung aufweist. Dieser Scanner, beispielsweise eine Laserscanner, kann an der Oberkante des Portalstaplers in Fahrtrichtung angeordnet sein. Durch den Laserscanner werden die Stützen des Portalkranes als Positionierhilfen erfasst. Das kann geschehen, indem der Scanner Winkel und Abstand der Stützen des Portalkranes erfasst und an einen Auswerterechner weitergibt. Die Software des Auswerterechners beinhaltet Daten über die Kontur der Stützen des Containerkranes und ermittelt so die exakte Lage des Transportfahrzeuges relativ zu den Stützen des Containerkranes.

Nachdem mittels Auswerterechner die Ist-Position des Portalstaplers bestimmt wurde, erfolgt ein Vergleich mit der Soll-Position, in die ein Container gebracht werden soll. Mittels Fahrantrieb und Antriebssteuerung und einem laufenden Vergleich von Ist- und Soll-Daten über einen Positionsregler verkehrt das Fahrzeug mit dem Container so lange in die gewünschte Position, bis die Daten von Soll-Position und Ist-Position übereinstimmen. Eine Orientierung erfolgt dabei laufend über die vom Scanner erfassten Daten der Stützen des Containerkranes.

Vorteilhaft ist es für das Verfahren, wenn mehrere Laserscanner am Fahrzeug angeordnet sind. Diese können senkrecht oder waagerecht angeordnet sein. Entscheidend ist, dass ihre Position gegenüber dem Fahrzeug abgeglichen ist. Vorteilhaft ist es jedoch, die Laserscanner waagerecht am Fahrzeug anzubringen in einer Höhe, in der ein eindeutiges Orientieren an den Containerkranstützen möglich ist.

Im Folgenden soll die Erfindung an einem Ausführungsbeispiel und 3 Figuren näher erläutert werden. Die Figuren zeigen:
- Fig. 1: Schematische Darstellung einer Containerbrücke und eines Portalstaplers mit Laserscanner bei der Anfahrt auf eine Containerbrücke in drei Ansichten;
- Fig. 2: schematische Darstellung einer Containerbrücke und eines Portalstaplers mit Laserscanner in drei Ansichten bei einer Positionierung unter einer Containerbrücke;
- Fig. 3: schematische Darstellung der Funktion des Auswerterechners.

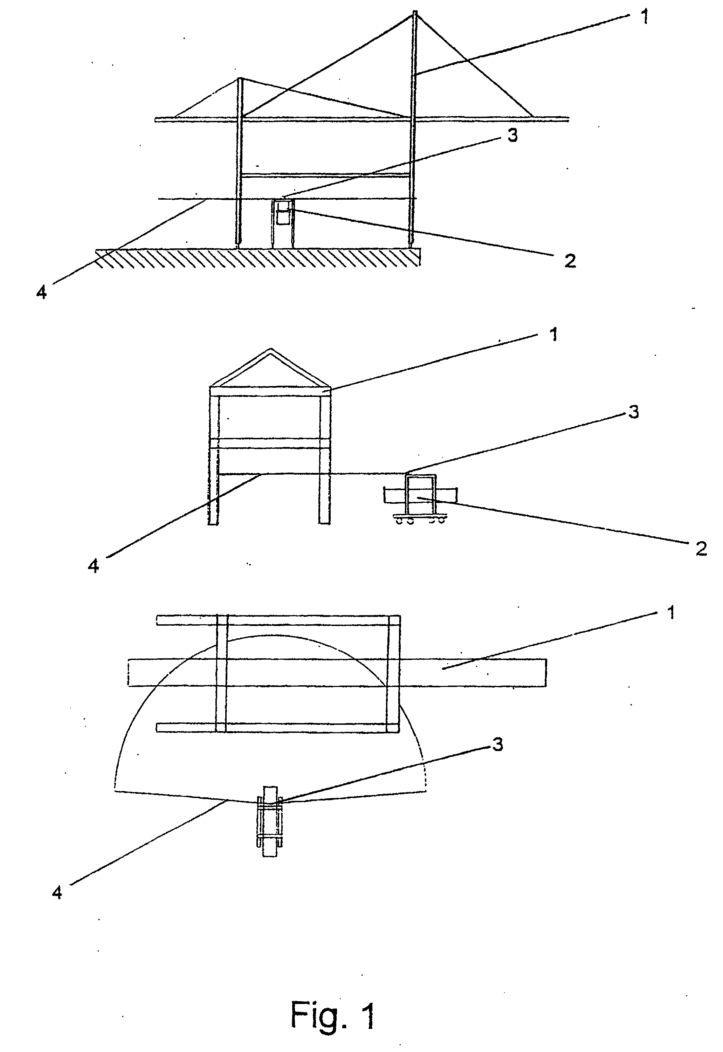

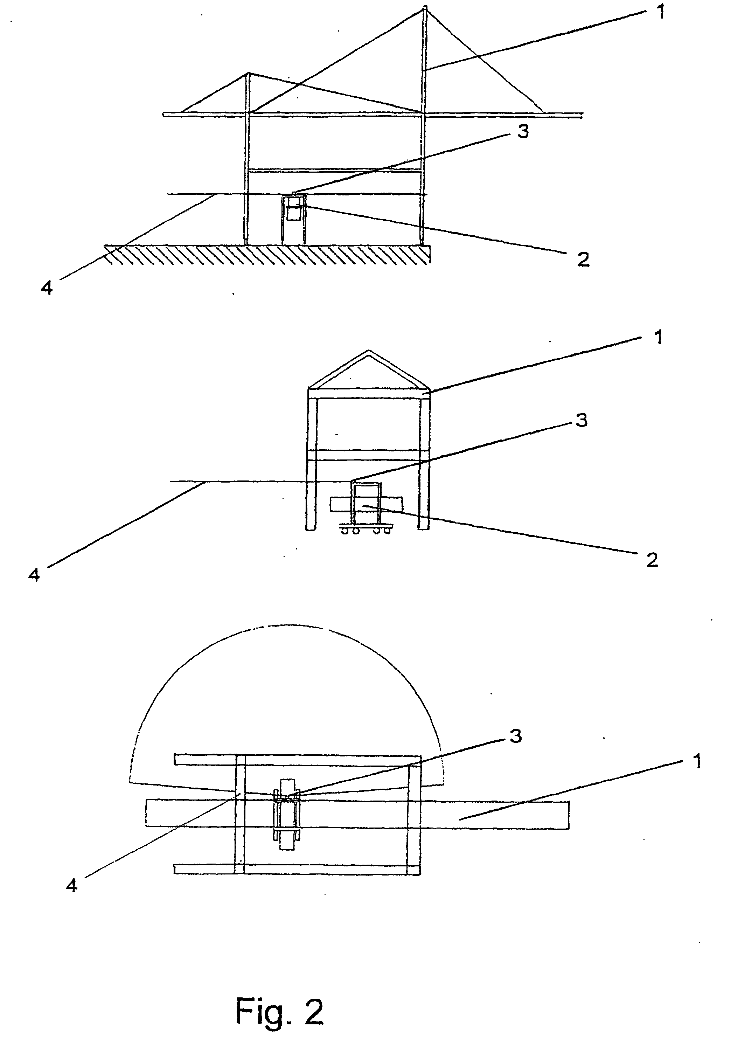

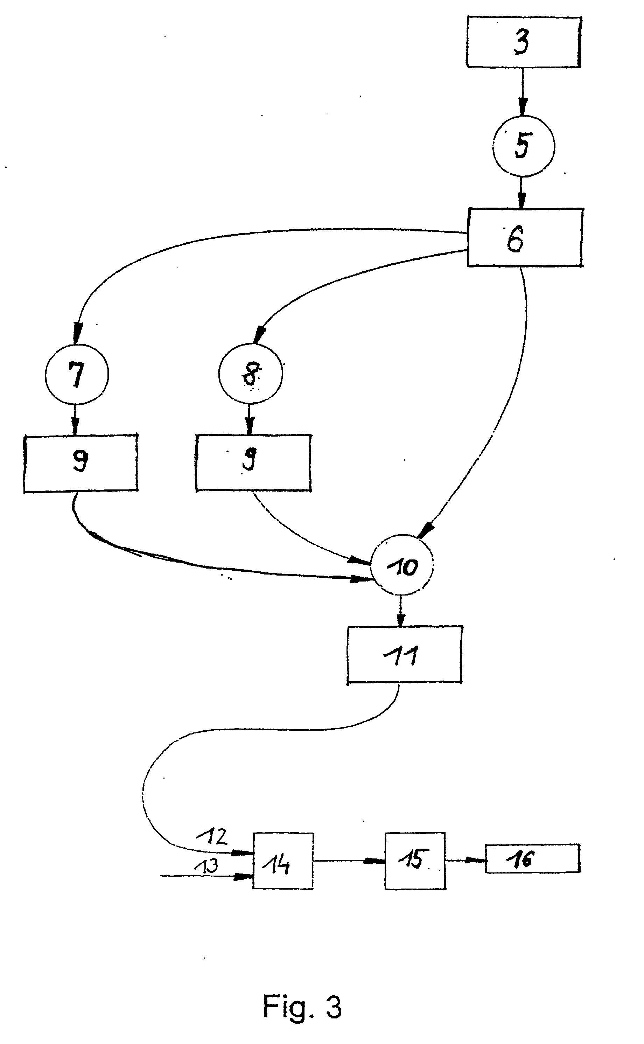

Die Fig. 1 zeigt in drei Ansichten einen Portalstapler 2, auf dem ein Laserscanner 3 angeordnet ist, in dessen Suchfeld sich die Stützen eines Containerkranes 1 befinden, wobei der Portalstapler vor dem Containerkran 1 steht. Der Laserstrahl 4 erfasst zwei Stützen des Portalkranes 1 in Höhe der oberen Kante des Portalstaplers 2. In der in Fig. 1 gezeigten Position des Portalstaplers 2 werden zunächst die vorderen Stützen des Portalkranes 1 erfasst und gespeichert. Um die hinteren Stützen des Portalkranes 1 zu erfassen, verfährt der Portalstapler 2 in die Position, die in Fig. 2 gezeigt wird. Nach diesen beiden Stellungen des Portalstaplers, in denen dieser seine eigene Position gegenüber den Stützen des Containerkranes bestimmt, kann der Portalstapler kontinuierlich über die Daten, die über den Laserscanner zur Position der Containerkranstützen an den Auswerterechner gelangen, arbeiten. Die schematische Darstellung der Funktion des Auswerterechners zeigt die Fig. 3. Der Laserscanner 3 liest 5 kontinuierliche Daten 6 ein, die die vordere Stütze 7 bzw. die hintere Stütze 8 betreffen. Diese Daten werden abgespeichert 9, woraus die Position des Fahrzeuges bestimmt wird 10. Weiterhin wird der Abstand des Fahrzeuges zum Ziel bestimmt 11. Die auf diese Weise gewonnene Ist-Position 12 wird mit einer vorgegebenen Soll-Position 13 verglichen. Ein Positionierregler 14 vergleicht auf diese Weise ständig die erfassten Daten mit den vorgegebenen Daten. Der Positionierregler 14 wirkt auf die Antriebssteuerung 15 bzw. den Fahrantrieb 16 so lange, bis die Daten der Soll-Position 13 mit den Daten der Ist-Position 12 übereinstimmen. Dann hat der Portalstapler 2 sein Ziel erreicht und kann den Container in der gewünschten Position absetzen.

### Liste der verwendeten Bezugszeichen

- 1: Containerkran
- 2: Portalstapler
- 3: Laserscanner / Scanner
- 4: Laserstrahl
- 5: Einlesen von Daten
- 6: Scannerdaten
- 7: Einlesen von Daten der vorderen Stütze
- 8: Einlesen von Daten der hinteren Stütze
- 9: abgespeicherte Daten der Stützen
- 10: Konturen suchen und Positionsbestimmung
- 11: Abstand des Fahrzeuges zum Ziel
- 12: Ist-Position
- 13: Soll-Position
- 14: Positionsregler
- 15: Antriebssteuerung
- 16: Fahrantrieb

## Patentansprüche

1. Verfahren zur Bestimmung der Lage eines Fahrzeuges (2), vorzugsweise eines Portalstapfers(2), relativ zu einem Containerkran (2), bei dem ein Sensor (3) zur Lagebestimmung des Fahrzeuges (2) dient und Auswerteeinrichtungen mit einem Erkennungsgerät gekoppelt sind, **dadurch gekennzeichnet, dass**
als Positionierhilfen die Stützen eines Containerkranes (1) mittels mindestens eines am Fahrzeug angeordneten Scanners (3) in Winkel und Abstand erfasst und die erfassten Daten an die Auswerteeinrichtung weiter gegeben werden, die diese Signale mit in ihrem Programm vorhandenen Signalen vergleicht und somit die exakte Position des Fahrzeuges gegenüber den Stützen des Containers bestimmt, wobei auf der Basis dieser Bestimmung das Fahrzeug in eine exakt vorbestimmte Soll - Position gegenüber den Stützen des Containers verfahrbar ist.

2. Verfahren nach Anspruch 1, **dadurch gekennzeichnet, dass**
die Auswerteeinrichtung die Kontur beliebiger Containeranlagen einlemt.

## Claims

1. Method of determining the position of a vehicle (2), preferably a portal stacker (2), relative to a container crane (1), wherein a sensor (3) serves to determine the position of the vehicle (2), and evaluating devices are connected to a detector, **characterised in that** the supports of a container crane (1) are picked-up as positioning aids, in respect of angle and spacing, by means of at least one scanner (3), which is disposed on the vehicle, and the picked-up data is passed to the evaluating device, which compares these signals with signals provided in its program and hence determines the exact position of the vehicle relative to the supports of the container, the vehicle being displaceable into an exactly predetermined desired position relative to the supports of the container on the basis of this determination.

2. Method according to claim 1, **characterised in that** the evaluating device memorises the contour of any desirable container systems.

## Revendications

1. Procédé pour déterminer la position d'un véhicule (2), de préférence d'un chariot-cavalier (2), par rapport à une grue de conteneur (2) pour laquelle un capteur sert à déterminer la position du véhicule (2) et des dispositifs d'évaluation sont couplés à un appareil de détection, **caractérisé en ce que** l'on détecte au moyen d'un scanner (3), disposé sur le véhicule, les angles et distances des supports, servant d'aide au positionnement, d'une grue de conteneur (1), et **caractérisé en ce que** les données détectées sont retransmises au dispositif d'évaluation qui compare ces signaux avec les signaux présents dans leur programme et détermine ainsi la position exacte du véhicule par rapport au support de conteneur ; le véhicule étant déplaçable sur la base de cette détermination dans une position de consigne prédéterminée par rapport aux supports du conteneur.

2. Procédé selon la revendication 1, **caractérisé en ce que** le dispositif d'évaluation apprend le contour d'installations de conteneurs quelconques.
